# FASCICULE DE BREVET EUROPEEN

(11) **EP 3 702 269 B1**
(45) Date de publication et mention de la délivrance du brevet: **21.04.2021**
(21) Numéro de dépôt: 20156818.5
(22) Date de dépôt: 12.02.2020
(51) Int. Cl.: B64C 13/28, B64C 27/56, B64C 13/04, B64C 13/10, G05G 5/03, B64D 45/00

(54) **MÉCANISME D'ALERTE HAPTIQUE POUR ALERTER UN PILOTE D'AÉRONEF ET AÉRONEF**
HAPTISCHER WARNMECHANISMUS ZUR WARNUNG EINES PILOTEN EINES FLUGZEUGS UND FLUGZEUG
A HAPTIC ALERT MECHANISM FOR ALERTING AN AIRCRAFT PILOT, AND AN AIRCRAFT

(30) Priorité: 28.02.2019 FR 1902078
(43) Date de publication de la demande: 02.09.2020
(73) Titulaire: Airbus Helicopters, 13725 Marignane Cedex (FR); AIRBUS HELICOPTERS DEUTSCHLAND GmbH, 86609 Donauwörth (DE)
(72) Inventeur: GROHMANN, Boris, 81247 MUNICH (DE); TEMPIER, Christophe, 13127 VITROLLES (FR); LAGREVOL, William, 42000 SAINT ETIENNE (FR); SALESSE-LAVERGNE, Marc, 13190 ALLAUCH (FR)
(74) Mandataire: GPI Brevets

(56) Documents cités:
- EP-A1- 3 069 990
- FR-A1- 2 766 158
- FR-A1- 2 991 288
- US-A1- 2005 151 672

## Description

La présente invention concerne un mécanisme d'alerte haptique d'un pilote d'aéronef et un aéronef. L'aéronef peut être par exemple un giravion muni d'organes de commande de vol pour modifier le pas des pales d'un rotor procurant au moins la sustentation du giravion. La présente invention relève plus particulièrement de tels organes de commande de vol comportant un mécanisme d'alerte haptique avertissant un pilote du giravion du dépassement d'une limite opérationnelle de l'aéronef.

Les giravions sont des aéronefs ayant une voilure tournante dont notamment la sustentation est procurée au moins partiellement par un rotor.

Dans le cadre spécifique d'un hélicoptère, un rotor qualifié de principal participe non seulement à la sustentation du giravion, mais aussi à sa propulsion suivant des directions quelconques d'avancement. Sur certains hélicoptères un rotor arrière est utilisé pour piloter le mouvement en lacet de l'aéronef.

Le giravion peut comporter un manche cyclique relié par des chaines mécaniques à un rotor afin de contrôler cycliquement le pas des pales d'un rotor et un levier de pas collectif relié par des chaines mécaniques au rotor afin de contrôler collectivement le pas de ces pales. Un mouvement du levier de pas induit une modification identique du pas des pales.

Un système de pilotage automatique peut comprendre des vérins agencés en parallèle ou en série des chaines mécaniques pour générer des commandes automatisées de vol.

Par ailleurs, le ou les rotors équipant un aéronef et notamment un giravion sont entraînés en rotation par une installation motrice munie d'un ou plusieurs moteurs voire d'au moins une boîte de transmission de puissance et/ou d'un ou plusieurs arbres de liaison...

Chaque moteur peut fonctionner selon une enveloppe de fonctionnement incluant plusieurs régimes différents, chaque régime pouvant être mis en œuvre par le moteur. En effet, les limitations d'un moteur et les limitations d'une boîte de transmission de puissance peuvent permettre de définir divers régimes de fonctionnement selon lesquels un moteur peut fonctionner et notamment:
- le régime de décollage défini par une puissance maximale au décollage PMD et une limitation de durée d'utilisation prédéterminée de cette puissance maximale au décollage,
- le régime maximal continu défini par une puissance maximale en continu PMC correspondant par exemple à environ 90% de la puissance maximale au décollage PMD et par une durée d'utilisation de cette puissance maximale en continu généralement illimitée,
- un régime transitoire défini par une puissance maximale en transitoire PMT.

Sur un giravion multimoteur, l'enveloppe de fonctionnement englobe aussi des régimes de surpuissance d'urgence, uniquement utilisés lorsque l'un des moteurs est en panne :
- le premier régime d'urgence, dénommé parfois « OEI 30" », défini par une puissance de super urgence PSU par exemple égale à environ 112% à 120% de la puissance maximale au décollage PMD et par une durée d'utilisation de cette puissance de super urgence PSU prédéterminée, la puissance de super urgence étant classiquement utilisable trois fois pendant un vol,
- le deuxième régime d'urgence, dénommé parfois « OEI 2' », ce deuxième régime d'urgence étant défini par une puissance maximale d'urgence PMU par exemple égale environ à 105% à 112% de la puissance maximale au décollage PMD et par une durée d'utilisation de cette puissance maximale d'urgence PMU prédéterminée ;
- le troisième régime d'urgence, dénommé parfois « OEI cont », ce troisième régime d'urgence étant défini par une puissance intermédiaire d'urgence PIU sensiblement égale à la puissance maximale au décollage PMD et par une durée d'utilisation illimitée de cette puissance intermédiaire d'urgence PIU pour le reste du vol après la panne du turbomoteur.

Pour chaque régime, des limitations opérationnelles permettant d'obtenir les puissances précitées PMC, PMD, PMT, PSU, PMU, PIU sont définies. Sur un turbomoteur, ces limites sont généralement surveillées par l'intermédiaire de trois paramètres de surveillance du turbomoteur : la vitesse de rotation du générateur de gaz du turbomoteur, le couple moteur et la température des gaz à l'entrée de la turbine libre basse pression du turbomoteur respectivement dénommés Ng, Cm et T45 par l'homme du métier. Si le turbomoteur comporte un étage de turbine haute pression, il est aussi possible d'utiliser la température des gaz à l'entrée de la turbine haute pression dénommée TET.

Ainsi, pour chaque régime de l'enveloppe de fonctionnement du moteur, le motoriste établit des limites pour chaque paramètre de surveillance du moteur.

Pour contrôler ces limites, l'aéronef peut comprendre de multiples indicateurs, chaque indicateur fournissant une information relative à un unique paramètre de surveillance.

Pour limiter le nombre d'indicateurs, un instrument de première limitation, en abrégé « IPL » peut être utilisé.

D'autres limitations opérationnelles peuvent être de type structurel en étant fonction de facteur de charges subis ou de type aérodynamique en étant relatives par exemple au domaine de vortex de l'aéronef.

Des systèmes haptiques peuvent aussi être agencés pour prévenir de manière tactile un pilote qu'une limite opérationnelle est atteinte. De tels systèmes sont notamment utiles si le pilote doit observer l'environnement extérieur durant une phase particulière et lorsque le pilote ne peut donc pas observer les divers instruments prévus pour surveiller ces limites.

Comme indiqué précédemment, un aéronef peut être muni de vérins parallèles d'un système de pilotage automatique, dénommés classiquement « vérin de trim ». Pour une chaîne mécanique de commande donnée, un vérin de trim comporte un moteur agencé en parallèle d'un organe de commande de vol afin de pouvoir déplacer une partie de la chaîne mécanique reliée à cet organe de commande de vol sur une amplitude importante et à faible vitesse.

Selon une forme de réalisation, un vérin de trim peut de plus transmettre une sensation d'efforts au pilote en réponse aux manœuvres des pales que le pilote opère par l'intermédiaire d'un organe de commande de vol, notamment un levier de pas collectif. A cet effet, le vérin de trim intègre un système à retour d'efforts générateur d'un effort résistant à l'encontre d'un entraînement par l'homme de l'organe de commande de vol. Le pilote humain peut disposer d'une commande inhibant la mise en œuvre du système à retour d'efforts, connu sous la dénomination « trim release » en langue anglaise.

Par exemple, à haute vitesse un effort résistant est généré sur un aéronef bimoteur ayant aucun moteur en panne lorsqu'une limite du régime maximal continu PMC est dépassée, cet effort croissant au fur et à mesure que l'aéronef se rapproche d'une limite du régime transitoire. Si un moteur est en panne, un effort résistant est généré lorsqu'une limite du troisième régime d'urgence est dépassée, cet effort croissant au fur et à mesure que l'aéronef se rapproche d'une limite du premier régime d'urgence. La limite opérationnelle à partir de laquelle l'effort résistant est généré est donc variable.

Les différents types de vérins de trim connus comprennent :
-) les vérins de trim de type passifs motorisés à friction procurant un effort résistant constant indépendant de la position de l'organe de commande de vol.
-) les vérins de trim motorisés à ancrage passif ou actif procurant un effort résistant variable à l'encontre d'une manœuvre de la chaîne principale de commande par l'organe de commande de vol entraîné par l'homme.

Le document FR 2766158 décrit un dispositif comprenant une butée pour former un point dur s'opposant à la poursuite d'un mouvement d'un levier de pas collectif. La butée est déplaçable par un moteur.

Selon une variante, ce dispositif comporte un moteur relié à une entrée d'un boîtier de réduction de vitesse. Une sortie de ce boîtier de réduction est reliée à un premier arbre par un accouplement à friction. Le premier arbre est fixé à un plateau portant deux excroissances formant deux butées. Dès lors, un butoir est mobile en rotation entre ces deux butées. Ce butoir est relié par un deuxième arbre à une extrémité d'un levier intermédiaire par un organe fusible, une autre extrémité du levier intermédiaire étant reliée au moyen d'une bielle rigide à une timonerie de pas collectif. Une rotation du levier de pas collectif entraîne une rotation du butoir.

Le document US 7 098 811 décrit un dispositif d'alerte qui est composé d'une part d'un vibreur et d'autre part d'une cartouche à ressort montée en prise sur une chaine mécanique reliée à un levier de pas collectif. La cartouche à ressort s'étend d'une extrémité fixée à la chaîne mécanique à une extrémité fixée à un bras d'un moteur électrique dont la mise en œuvre est placée sous la dépendance d'une unité de calcul.

Au repos, le moteur n'exerce aucun effort sur la cartouche à ressort, le bras étant libre en rotation. Lorsqu'un premier seuil d'urgence est atteint, l'unité de calcul active le moteur électrique pour que la cartouche à ressort génère un effort résistant à l'encontre de la manœuvre du levier de pas par le pilote. A un deuxième seuil d'urgence l'unité de calcul active le vibreur.

Le document EP3069990 présente un mécanisme muni d'un moteur pas-à-pas.

Le document FR 2991288 est aussi connu.

Le but de la présente invention est de proposer un mécanisme innovant qui soit relativement simple et susceptible d'optimiser la sécurité du système.

Ainsi l'invention concerne un mécanisme d'alerte haptique configuré pour exercer un effort sur un levier afin de signaler tactilement le dépassement d'une limite opérationnelle, ledit mécanisme comprenant un actionneur. Cet actionneur peut être fixé à un support lui-même fixé à une structure, par exemple une structure d'un véhicule, ou peut être fixé directement à une telle structure.

Ce mécanisme comporte :
- au moins un bras d'un butoir mobile, ledit bras étant mis en mouvement rotatif autour d'un axe de rotation par ledit actionneur,
- une boîte à ressort munie d'une enceinte dans laquelle est agencé un ressort de torsion précontraint, ladite boite à ressort étant mobile en rotation autour d'un axe de rotation, ladite enceinte comprenant au moins un ergot mobile en rotation autour dudit axe de rotation, ladite enceinte présentant un flanc avant, ledit ressort de torsion s'étendant d'une première extrémité solidaire de l'enceinte jusqu'à un doigt, ledit doigt traversant un orifice allongé dudit flanc avant et s'étendant partiellement en dehors de l'enceinte en formant une butée élastique mobile surpassable, et donc réglable, le mécanisme comportant une position au repos dudit doigt par rapport au dit axe de rotation en l'absence d'un effort exercé sur le doigt par ledit levier, la position au repos étant réglable en déplaçant ledit butoir, le doigt dans ladite position au repos représentant ladite limite opérationnelle lorsque l'ergot est en contact avec ledit au moins un bras, ledit doigt étant mobile dans ledit orifice en comprimant ledit ressort lorsque ledit levier exerce un effort sur ledit doigt visant à surpasser ladite limite opérationnelle.

Selon une variante, le mécanisme peut comprendre par sécurité un corps immobile en rotation autour de l'axe de rotation, ledit corps portant au moins un organe d'arrêt formant un organe d'arrêt fixe en rotation par rapport à l'axe de rotation pour limiter l'amplitude de rotation d'un ergot par interférence de forme.

L'expression « organe d'arrêt fixe en rotation par rapport à l'axe de rotation » signifie que l'organe d'arrêt ne possède pas un degré de liberté en rotation autour de l'axe de rotation en fonctionnement. Cet organe d'arrêt peut de façon plus globale ne posséder aucun degré de liberté en fonctionnement.

Dès lors, le mécanisme comporte une boite à ressort munie d'un doigt mobile par rapport à l'enceinte de cette boîte à ressort lorsqu'un effort est exercé sur ce doigt par un levier. La boite à ressort peut être montée « fou » en étant libre en rotation autour de l'axe de rotation. La position au repos du doigt est réglable en déplaçant, au moins selon un premier sens de rotation, chaque ergot avec un bras avec l'actionneur, cette position au repos étant éventuellement butée par sécurité selon un deuxième sens de rotation par l'organe d'arrêt.

La position dite par commodité « position au repos » représente la position ou se trouve le doigt lorsque le levier n'exerce pas un effort sur ce doigt tendant à déplacer le doigt par rapport à l'enceinte. Cette position au repos illustre une limite opérationnelle par exemple d'un aéronef. Lorsque la limite opérationnelle varie, l'actionneur déplace chaque bras. Par exemple, lorsque la limite opérationnelle est relative à un paramètre de surveillance d'une installation motrice bimoteur, la panne d'un moteur de l'installation motrice induit un déplacement du bras.

Si un bras est en contact avec un ergot à l'issue ou pendant la rotation de ce bras, alors le doigt se trouve dans la position de repos illustrant la limite opérationnelle à l'issue de ladite rotation du bras.

Si le bras n'est pas en contact avec l'ergot à l'issue de ladite rotation, un contact ultérieur du levier sur le doigt induit un déplacement de la boîte à ressort vers le bras. Lorsque l'ergot entre en contact avec le bras alors la nouvelle limite opérationnelle est atteinte.

L'expression « butée élastique mobile surpassable » signifie que la position du doigt est réglable ce qui rend la butée réglable.

De plus, en poussant ce doigt à partir de la position de repos avec le levier en le faisant coulisser dans l'orifice allongé, le mécanisme autorise un déplacement du levier induisant un dépassement de la limite opérationnelle. L'orifice allongé représente un rail guidant le déplacement du doigt. Durant ce mouvement, le ressort de torsion est générateur d'un effort résistant à l'encontre d'un entraînement par l'homme du levier La boîte à ressort génère pendant ce déplacement un gradient d'effort que peut ressentir un pilote. Cette caractéristique justifie l'emploi du terme « surpassable » dans la mesure où le doigt ne bloque pas le déplacement du levier lorsque la limite opérationnelle est atteinte, au moins sur une plage correspondant à la longueur de l'orifice allongé.

En outre, si le pilote relâche le levier, le doigt retourne dans sa position au repos ce qui explique le terme « élastique ».

Dès lors, le mécanisme selon l'invention peut permettre à un pilote de ressentir le dépassement d'une limite opérationnelle tout en autorisant le dépassement de cette limite opérationnelle. Le levier peut être un organe dont le déplacement induit une variation de la limite opérationnelle.

De plus, ce mécanisme est mécaniquement simple en utilisant un simple ressort précontraint. En outre, l'actionneur peut être relativement lent et génère une puissance simple ce qui s'avère sécuritaire.

Ce mécanisme n'est donc pas un vérin de trim et s'avère plus simple qu'un vérin de trim.

Le mécanisme peut de plus comporter une ou plusieurs des caractéristiques qui suivent.

Selon un aspect, l'orifice allongé peut être un trou oblong centré sur l'axe de rotation.

Le trou oblong peut être dimensionné pour couvrir le débattement total du levier même si le mécanisme est ancré au plus bas de sa course.

Selon un aspect, le doigt peut être mobile dans ledit orifice d'un premier bord inclus de l'orifice jusqu'à un deuxième bord de l'orifice non inclus, ledit doigt étant plaqué contre le premier bord en l'absence d'un effort exercé sur le doigt par ledit levier, un jeu séparant toujours le doigt du deuxième bord de l'orifice.

Un tel jeu tend à permettre de garantir le plein débattement théorique du levier de la commande. Lorsque le levier est un levier de pas collectif, cette caractéristique permet de garantir que le levier peut atteindre les butées de pas collectif.

Selon un aspect, la précontrainte peut ne pas être réglable.

Selon un aspect, l'actionneur peut être muni d'une partie rotative et d'une partie non tournante, ledit actionneur ayant un frein configuré pour immobiliser ladite partie rotative par rapport à la partie non tournante.

Par exemple, le frein immobilise la partie rotative par rapport à la partie non tournante lorsque le bras est immobile pour ne pas avoir à maintenir la position du bras en sollicitant l'actionneur.

L'actionneur peut être un moteur électrique et par exemple un moteur à balai, un moteur sans balai ou un moteur pas à pas.

Le mécanisme peut aussi comprendre un capteur pour mesurer la position de la boîte à ressort, et par exemple un capteur de position du moteur de l'actionneur.

Selon un aspect, l'actionneur peut être muni d'une partie rotative mobile en rotation autour dudit axe de rotation et reliée au dit au moins un bras.

Selon un aspect, ledit au moins un bras du mécanisme peut comporter au moins deux dits bras portés par un moyeu fixé à l'actionneur, ladite boîte à ressort comprenant un ergot par bras.

Chaque bras peut s'étendre radialement ou sensiblement radialement au regard de l'axe de rotation. Par exemple, le butoir peut comporte une structure en étoile munie de trois bras.

Selon une variante, l'enceinte peut être libre en rotation autour de l'axe de rotation, au moins un ergot pouvant en présence d'un organe d'arrêt être disposé entre un bras et un tel organe d'arrêt optionnel.

Selon une autre variante, au moins un bras comporte une chape munie de deux joues, un ergot étant agencé entre lesdites deux joues. Un bras peut alors induire la rotation de l'enceinte selon deux sens opposés. Cette disposition n'interdit pas l'agencement d'un corps ayant un organe d'arrêt.

Selon un aspect, le corps peut le cas échéant être disposé au moins partiellement autour de l'actionneur, ledit organe d'arrêt optionnel s'étendant éventuellement radialement au regard dudit axe de rotation en s'éloignant de l'actionneur, ladite boîte à ressort étant montée en liaison pivot autour du corps.

Eventuellement, une enceinte peut être montée en liaison pivot autour de l'actionneur en cas d'absence du corps ou autour du corps.

Selon un aspect, l'enceinte peut comporter :
- un premier composant comprenant un flanc arrière portant des premières branches, ledit flanc arrière comportant éventuellement une lumière traversée par l'actionneur et ledit corps, chaque première branche s'étendant à partir dudit flanc arrière selon une direction axiale, ladite première extrémité du ressort de torsion étant fixée au premier composant,
- un deuxième composant muni d'un anneau portant une deuxième branche par première branche, ledit ressort de torsion s'étendant partiellement dans un espace agencé radialement entre les premières branches et longitudinalement entre le flanc arrière et l'anneau, chaque deuxième branche s'étendant à partir dudit anneau parallèlement à une première branche en s'éloignant dudit espace, chaque deuxième branche formant au moins partiellement un ergot, ledit doigt traversant ledit anneau et étant en saillie longitudinale par rapport à des plans contenant des extrémités libres des premières branches et des deuxièmes branches,
- un palier traversant ledit flanc arrière ainsi que ledit ressort et ledit anneau, ledit palier portant ledit flanc avant, ledit flanc avant présentant une échancrure par ergot, chaque ergot étant agencé dans une dite échancrure, l'organe d'arrêt étant le cas échéant éventuellement agencé longitudinalement entre le flanc avant et ledit au moins un bras.

Un tel mécanisme s'avère simple et compact.

Chaque deuxième branche peut être agencée radialement entre une première branche et l'axe de rotation, et peut être accolée radialement à une première branche.

Chaque deuxième branche peut être fixée à une première branche par des moyens usuels.

Selon un aspect, le mécanisme peut comporter un contacteur détectant un contact entre ledit doigt et ledit levier.

Le terme « contacteur » désigne un capteur détectant un contact. Par exemple, le contacteur est porté par le levier.

Un tel contacteur peut être utilisé par sécurité sur un aéronef, par exemple pour déclencher une alarme et/ou pour débloquer le frein si le contacteur détecte un contact entre le levier et le doigt alors que la limite opérationnelle n'est pas considérée comme étant atteinte par d'autres organes de l'aéronef.

De manière complémentaire ou alternative, un tel contacteur peut permettre le réalignement de la position de la butée élastique avec la position d'une commande reliée au mécanisme. En effet, lorsque la commande est déplacée et provoque la commutation du contacteur, alors la différence entre une mesure de position du manche et une mesure de position de l'ancrage de la butée élastique peut être mémorisée dans un calculateur afin de permettre l'ajustement ultérieur de la position de la butée élastique. Après ce premier réalignement, le contacteur permet au calculateur de vérifier à chaque commutation que la butée élastique est correctement positionnée, à savoir au moment de la commutation dans la position mémorisée. Dans la négative, le calculateur peut commander le mécanisme pour réajuster la position de la butée élastique afin de la déplacer dans la position requise et/ou peut signaler une anomalie de fonctionnement du mécanisme de butée élastique et /ou peut être passivé par débrayage.

Selon un aspect, la limite opérationnelle peut être au moins une des limites suivantes : une limite d'une installation motrice d'un aéronef équipé du mécanisme, une limite d'un facteur de charge exercé sur un aéronef équipé du mécanisme, une limite d'un domaine de vortex d'un aéronef équipé du mécanisme, une limite de vitesse air maximale (Velocity Never Exceed dénommée « VNE ») d'un aéronef équipé du mécanisme, une limite de vitesse de rotation d'un rotor principal (Nr), une limite de moment mât du rotor d'un aéronef équipé du mécanisme et par exemple d'un rotor principal sur un hélicoptère.

L'invention vise aussi un aéronef muni d'un rotor et d'une commande de pas collectif reliée à une chaine mécanique pour contrôler collectivement un pas des pales du rotor, cette commande de pas collectif comportant un dit levier.

Cet aéronef comporte un mécanisme selon l'invention, ledit aéronef comportant un calculateur relié à l'actionneur, le calculateur étant configuré pour établir ladite limite opérationnelle et transmettant un signal de commande à l'actionneur pour que le levier entre en contact avec ledit doigt lorsque ladite limite opérationnelle est atteinte.

L'invention vise aussi un procédé qui comporte les étapes suivantes :
- détermination par le calculateur d'une limite opérationnelle de l'aéronef,
- transmission par le calculateur à l'actionneur d'un signal de commande porteur d'une information relative à la position au repos que doit atteindre ledit doigt en l'absence d'effort exercé par le levier sur le doigt,

- mouvement de l'actionneur pour positionner ledit doigt dans ladite position au repos,
- surpassement de ladite limite opérationnel en exerçant un effort sur ledit doigt avec le levier, le doigt générant sur le levier un couple croissant au fur et à mesure de l'éloignement du doigt da la position au repos.

L'invention et ses avantages apparaîtront avec plus de détails dans le cadre de la description qui suit avec des exemples donnés à titre illustratif en référence aux figures annexées qui représentent :
[Fig 1] la figure 1, une vue d'un mécanisme selon l'invention,
[Fig 2] la figure 2, une vue d'un mécanisme selon l'invention,
[Fig 3] la figure 3, une vue d'un mécanisme selon l'invention,
[Fig 4] la figure 4, une vue d'un mécanisme selon l'invention coopérant avec un levier,
[Fig 5] la figure 5, un diagramme visant à illustrer le procédé d'élaboration d'une limite opérationnelle conditionnant la position du doigt du mécanisme selon l'invention,
[Fig 6] la figure 6, un diagramme visant à illustrer le procédé d'élaboration d'une limite opérationnelle conditionnant la position du doigt du mécanisme selon l'invention,
[Fig 7] la figure 7, un diagramme visant à illustrer le procédé d'élaboration d'une limite opérationnelle conditionnant la position du doigt du mécanisme selon l'invention, et
[Fig 8] la figure 8, une illustration d'un butoir ayant des bras munis de chape.

Les éléments présents dans plusieurs figures distinctes sont affectés d'une même référence.

Trois directions X, Y et Z orthogonales les unes par rapport aux autres sont représentées sur certaines figures.

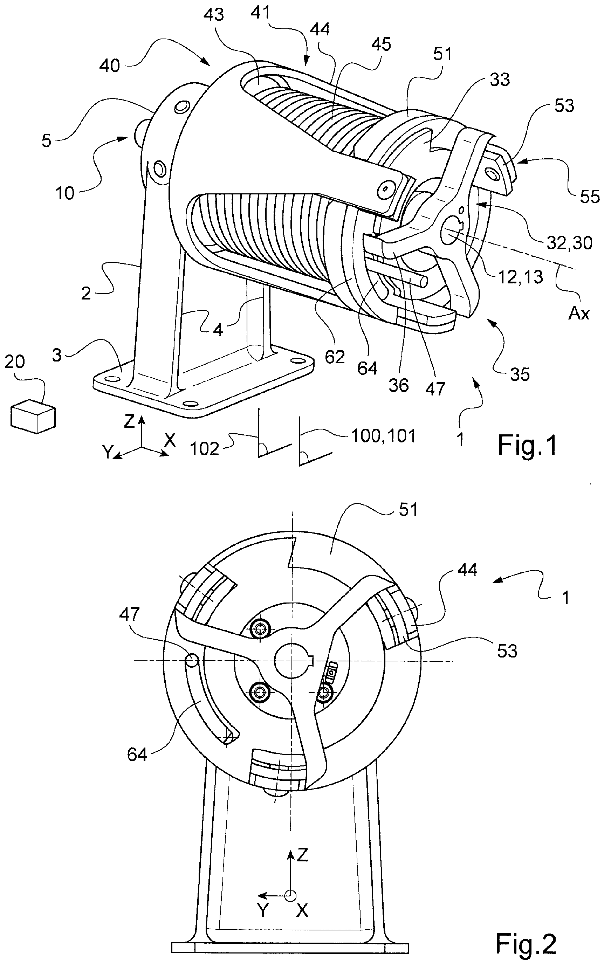

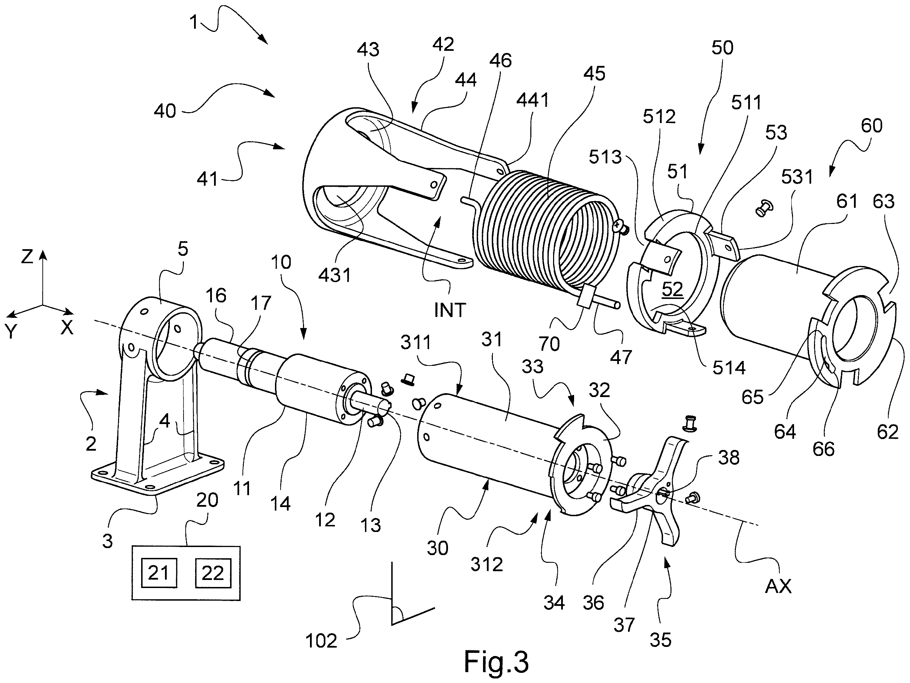

Les figures 1 à 3 présentent un mécanisme 1 selon l'invention présentant un doigt formant une butée pour un levier susceptible d'être en appui contre ce doigt, cette butée étant une butée mobile élastique pour être surpassable par le levier. La figure 1 présente ce mécanisme au travers d'une vue isométrique, la figure 2 présentant ce mécanisme 1 vu de face. Enfin, la figure 3 présente une vue éclatée de ce mécanisme 1.

La figure 3 présente une vue éclatée et détaillée d'une réalisation du mécanisme 1.

Ce mécanisme comporte un actionneur 10. Cet actionneur 10 est muni selon cet exemple d'un moteur 11 électrique. L'actionneur 10 peut être porté par un support 2. Par exemple, un tel support 2 comporte un socle 3 configuré pour être fixé à un porteur par des moyens usuels, par exemple par des moyens de vissage, de soudure, de rivetage, de collage... Un tel support 2 peut être solidarisé à au moins un pied 4, par exemple deux pieds selon l'illustration de la figure 3, chaque pied 4 étant fixé à un récepteur 5 portant directement ou indirectement l'actionneur 10.

L'actionneur 10 et le cas échéant son moteur peut être muni d'une partie rotative 12 et d'une partie non tournante 14. Par exemple, la partie non tournante 14 met en rotation la partie rotative 12 autour de l'axe de rotation AX de manière usuelle.

Cette partie rotative 12 peut comprendre un arbre de sortie 13 directement mis en rotation par la partie non tournante 14. Alternativement, la partie rotative 12 peut comprendre un rotor mis en rotation par la partie non tournante 14, le rotor entraînant l'arbre de sortie 13 par un réducteur de vitesse de rotation.

En particulier, le moteur 11 de l'actionneur 10 peut être un moteur rotatif électrique à balai, sans balai ou un moteur électrique pas à pas.

Eventuellement, l'actionneur comporte un frein 16 permettant d'immobiliser l'actionneur, par exemple en immobilisant la partie rotative 12 par rapport à la partie non tournante 14.

En outre, l'actionneur peut comporter un capteur de position 17 permettant de détecter la position de l'actionneur, à savoir par exemple la position d'un organe mobile de l'actionneur et le cas échéant de la partie rotative.

Selon un aspect, l'actionneur peut comprendre une unité de traitement intégrée commandant le moteur 11 sur ordre d'un calculateur 20. Le calculateur 20 peut comprendre une unique unité de calcul ou plusieurs unités de calcul diverses. Le calculateur 20 peut comprendre par exemple au moins un processeur 21, au moins une mémoire 22, au moins un circuit intégré, au moins un système programmable et/ou au moins un circuit logique, ces exemples ne limitant pas la portée donnée à l'expression « calculateur ». De même, chaque unité de calcul peut comprendre par exemple au moins un processeur 21, au moins une mémoire 22, au moins un circuit intégré, au moins un système programmable et/ou au moins un circuit logique, ces exemples ne limitant pas la portée donnée à l'expression « unité de calcul ». Alternativement voire de manière complémentaire, le moteur peut être commandé directement par le calculateur 20.

Par ailleurs, cet actionneur 10 a pour fonction de mettre en mouvement sur requête du calculateur 20 un butoir 35. Par exemple, l'actionneur 10 entraîne en rotation le butoir 35 autour d'un axe de rotation AX.

Dès lors, l'actionneur est mécaniquement solidarisé à un butoir 35 comprenant au moins un bras.

Selon l'exemple de la figure 3, le butoir 35 comporte un moyeu 37 solidarisé en rotation à la partie rotative 12. Par exemple, l'arbre de sortie 13 de la partie rotative 12 comporte une cannelure axiale disposée dans une gorge 38 du moyeu 37. Ce moyeu 37 porte en outre au moins un bras 36, et en particulier trois bras selon cette figure 3.

Une rotation de l'arbre de sortie de la partie rotative 12 autour de l'axe de rotation AX induit donc une rotation de chaque bras 36 autour de l'axe de rotation AX.

Selon un autre aspect, le mécanisme 1 peut comporter un corps 30.

Eventuellement, le corps 30 est disposé au moins partiellement autour de l'actionneur 10. Le cas échéant, la partie rotative 12 de l'actionneur 10 saille en dehors du corps 30 pour atteindre le butoir 35.

Le corps 30 est immobile en rotation autour de l'axe de rotation AX, par exemple en étant fixé de manière directe ou indirecte au support 2. Selon l'exemple représenté, le corps comprend un cylindre 31 creux qui s'étend d'une première zone extrémale 311 vissée au récepteur 5 du support 2 jusqu'à une deuxième zone extrémale 312 munie d'une collerette interne vissée à la partie non tournante de l'actionneur 10 par au moins une vis ayant une tige filetée parallèle à l'axe de rotation AX.

En outre, le corps 30 peut porter un ou plusieurs organes d'arrêt 33 et par exemple un unique organe d'arrêt 33 ou un organe d'arrêt 33 par bras 36. Chaque organe d'arrêt 33 peut s'étendre radialement en s'éloignant du corps 30 au regard de l'axe de rotation AX dans un plan géométrique 102 perpendiculaire à l'axe de rotation AX. Ce plan géométrique 102 peut passer par le butoir 35 et chaque organe d'arrêt 33. Chaque organe d'arrêt 33 forme un organe d'arrêt qui n'est pas donc pas mobile en rotation par rapport à l'axe de rotation AX.

Eventuellement, le corps 30 est muni d'une collerette externe 32 portant le cas échéant chaque organe d'arrêt 33. Une telle collerette est possiblement munie d'une encoche 34 dont la fonction est précisée par la suite.

En outre, le mécanisme 1 présente une boîte à ressort 40 innovante, mobile en rotation autour de l'axe de rotation AX dans les limites données par le butoir 35 et éventuellement par un organe d'arrêt du corps 30.

La boîte à ressort 40 est éventuellement disposée en liaison pivot autour de l'actionneur 10 voire le cas échéant autour du corps 30 et notamment du cylindre 31.

Cette boîte à ressort 40 est munie d'une enceinte 41 logeant partiellement un ressort de torsion 45 précontraint. De plus cette enceinte 41 est pourvue d'un ou plusieurs ergots 55. Chaque ergot 55 est positionné dans le plan géométrique 100 afin d'être libre en rotation autour de l'axe de rotation AX. Plus précisément, la boîte à ressort 40 peut comprendre un ergot par bras.

Selon la variante de la figure 3, l'enceinte 41 est libre en rotation, chaque ergot 55 étant positionné dans le plan géométrique 100 afin d'être libre en rotation autour de l'axe de rotation AX entre un bras 36 du butoir 35 et un organe d'arrêt 33.

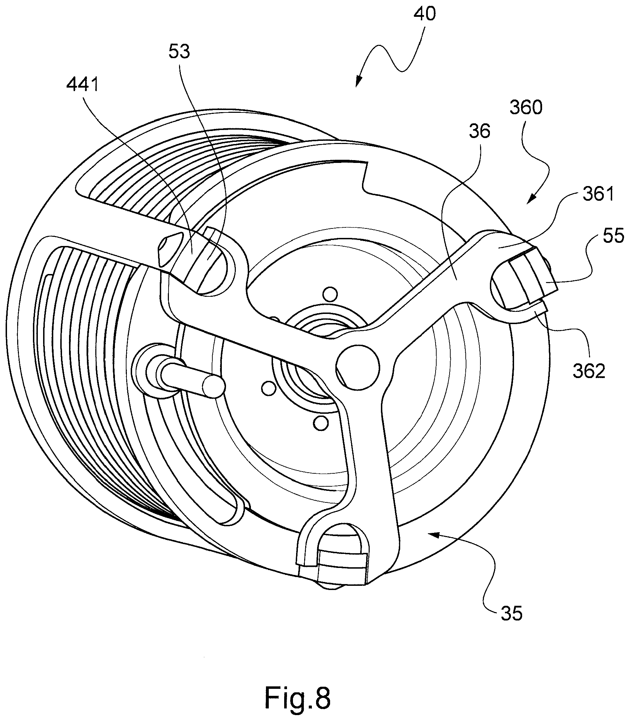

Selon la variante de la figure 8, chaque bras 36 peut comprendre une chape 360. Chaque chape 360 est une chape femelle munie de deux joues 361, 362 entre lesquelles se trouve un ergot 55.

De plus et en référence à la figure 3, la boîte à ressort 40 comprend un ressort de torsion 45 précontraint ayant un doigt 47 mobile par rapport à l'enceinte 41 de la boîte à ressort 40. Ce doigt 47 traverse un flanc avant de l'enceinte 41 pour s'étendre en dehors de l'enceinte et être en saillie longitudinale par rapport au plan géométrique 100. Le doigt 47 forme alors une butée élastique mobile et surpassable du mécanisme 1.

Selon la réalisation de la figure 3, l'enceinte 41 comporte un premier composant 42 formant un fond voire des parois de l'enceinte, un deuxième composant 50 formant l'avant de l'enceinte et un troisième composant 60 formant un palier. Le premier composant 42, le deuxième composant 50 et le troisième composant 60 coopèrent entre eux pour accueillir le ressort de torsion et former chaque ergot 55.

Par exemple, le premier composant comprend un flanc arrière 43 sensiblement orthogonal à l'axe de rotation AX. Ce flanc arrière 43 a une forme annulaire et présente éventuellement une lumière 431 traversée par l'actionneur 10 et le corps 30.

De plus, le premier composant 42 est muni d'une paroi latérale solidaire du flanc arrière 43. Par exemple, cette paroi latérale est ajourée. Selon la variante illustrée sur la figure 3, la paroi latérale comprend des premières branches 44, et en particulier par exemple trois premières branches 44. Chaque première branche 44 s'étend selon une direction axiale parallèle à l'axe de rotation AX jusqu'à une extrémité 441 à partir du flanc arrière 43, et par exemple à partir d'une périphérie externe du flanc arrière.

Le deuxième composant 50 est muni d'un anneau 51 qui s'étend radialement d'un bord interne 511 à un bord externe 512. Cet anneau 51 est traversé par l'actionneur 10 ainsi que le cas échéant par le corps 30 et le troisième composant 60. L'anneau 51 et le flanc arrière 43 délimitent longitudinalement un espace INT de la boîte à ressort.

De plus, l'anneau 51 porte au moins une deuxième branche 53, et par exemple autant de deuxièmes branches que de premières branches 44 soit trois deuxièmes branches selon l'exemple illustré. Chaque deuxième branche s'étend à partir de l'anneau 51 parallèlement à une première branche 44 en s'éloignant de l'espace INT jusqu'à une extrémité 531. Les extrémités 531 des deuxièmes branches et les extrémités 441 des premières branches sont par exemple positionnées respectivement dans un premier plan 100 et un deuxième plan 101 orthogonaux à l'axe de rotation AX. Le premier plan 100 et le deuxième plan 101 peuvent être confondus.

Eventuellement, chaque deuxième branche 53 est encastrée dans l'anneau 51 radialement entre le bord interne 511 et le bord externe 512 de l'anneau 51. Dès lors, l'anneau 51 peut présenter une ouverture externe 513 positionnée radialement au dessus de chaque deuxième branche. 53. Chaque première branche 44 traverse alors une ouverture externe 513. Dès lors, chaque deuxième branche 53 est agencée radialement entre l'axe de rotation AX et une première branche 44. L'anneau 51 peut de plus comprendre une ouverture interne 514 au niveau du bord interne 511

Chaque première branche peut être vissée ou rivetée à une deuxième branche.

En outre, chaque deuxième branche 53 forme un ergot 55, seule ou en coopération avec une première branche 44 et notamment avec une extrémité 441 d'une premier branche 44.

Par ailleurs, le troisième composant comporte un palier 61. Ce palier 61 peut comprendre un cylindre creux. Le palier 61 s'étend longitudinalement par exemple à partir du flanc arrière 43 voire traverse ce flanc arrière puis traverse l'anneau 51. Dès lors, l'espace interne INT de la boîte à ressort est délimité radialement par le palier 61 et les premières banches 44 du premier composant.

En outre, le palier 61 porte le flanc avant 62. Ce flanc avant prend la forme d'une collerette frontale qui présente une échancrure 63 par ergot 55. Dès lors, chaque première branche et chaque deuxième branche traversent une telle échancrure 63.

En outre, le palier 61 est disposé autour du corps 30. La collerette frontale 62 est alors agencée dans un plan orthogonal à l'axe de rotation entre l'anneau 51 et la collerette externe 32 du corps 30. Chaque organe d'arrêt 33 est le cas échéant alors agencé longitudinalement entre le flanc avant 62 et le butoir 35.

Enfin, la boîte à ressort 40 comporte le ressort de torsion 45 qui s'étend s'étendant partiellement dans l'espace interne INT. Ce ressort de torsion présente successivement une première extrémité 46 solidarisée à l'enceinte 41 et par exemple au flanc arrière 43, un serpentin disposé autour de l'axe de rotation AX dans l'espace interne INT puis un doigt 47 sortant de l'espace interne INT. Par exemple ce doigt s'étend selon une direction parallèle à l'axe de rotation AX. En outre ce doigt 47 peut traverser successivement l'ouverture interne 514 du deuxième composant, l'encoche 34 du corps 3 puis un orifice allongé 64 du flanc avant. Ce doigt peut être en saillie longitudinale du premier plan 100 et du deuxième plan 101 afin de pouvoir être en contact avec le levier 76 pour lequel le doigt forme une butée élastique mobile surpassable.

Par ailleurs, l'orifice allongé 64 peut être un trou oblong centré sur ledit axe de rotation AX.

Selon un autre aspect, le doigt 47 est mobile dans l'orifice 64 entre un premier bord 65 inclus de l'orifice 64 et un deuxième bord 66 non inclus de l'orifice 64. Le ressort étant précontraint dans l'enceinte 41, le doigt 47 est notamment plaqué contre le premier bord 65 en l'absence d'un effort exercé sur le doigt 47 par ledit levier 76. Par contre, l'orifice 64 et le mécanisme en général sont dimensionnés pour que le doigt 47 ne soit jamais en contact avec le deuxième bord 66.

Cette précontrainte du ressort de torsion n'est éventuellement pas réglable.

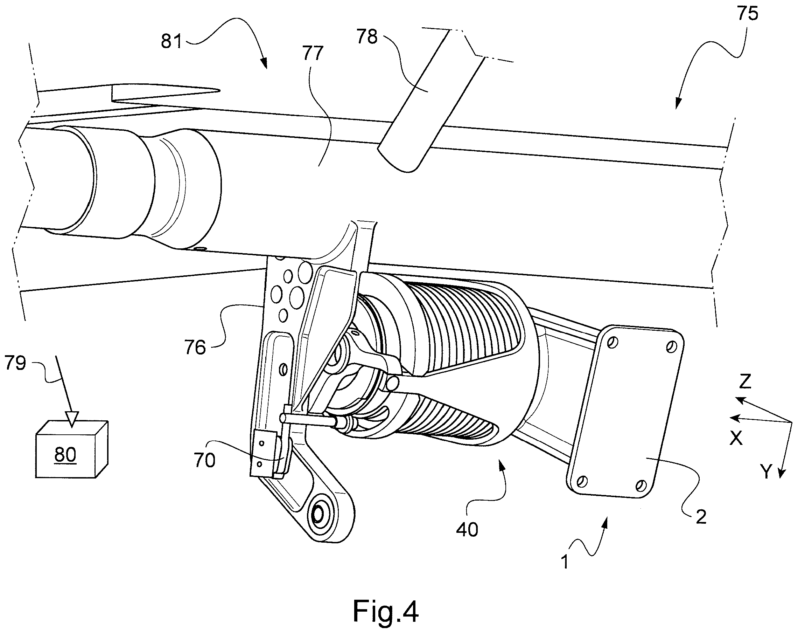

Par ailleurs, le mécanisme 1 peut comporter un contacteur 70 détectant un contact entre le doigt 47 et le levier 76. Ce contacteur est agencé sur le doigt 47 selon la figure 3 mais peut être agencé sur le levier selon la figure 4. Par exemple, un contacteur 70 peut prendre la forme d'un bouton-poussoir. Le contacteur peut être relié au calculateur 20 voire à un système d'alerte.

Le mécanisme 1 décrit précédemment peut être positionné sur tout type de porteur ayant besoin d'une butée mobile élastique surpassable par un levier.

En particulier et selon figure 4, le mécanisme peut être agencé sur un aéronef 75 muni d'un rotor 80. Cet aéronef comporte une commande 81 de pas collectif reliée à une chaine mécanique 79 pour contrôler collectivement un pas des pales du rotor 80. Une telle commande 81 peut par exemple comprendre un manche 78 solidaire d'un tube 77, ce tube 77 étant lui-même solidaire d'un levier 76 coopérant avec un mécanisme 1. D'autres agencements sont possibles et notamment des agencements usuels.

Dès lors, un calculateur 20 est configuré pour établir une limite opérationnelle et transmettre un signal de commande à l'actionneur 10 pour que le levier 76 entre en contact avec ledit doigt 47 lorsque ladite limite opérationnelle est atteinte.

Selon le procédé de l'invention et indépendamment de la nature du porteur du mécanisme 1 et du levier coopérant avec ce mécanisme 1, le calculateur 20 détermine une limite opérationnelle de ce porteur.

Sur un aéronef muni d'une installation motrice ayant au moins un moteur, à chaque instant la limite opérationnelle peut être au moins une des limites suivantes : une limite du moteur de l'installation motrice, une limite d'un facteur de charge exercé sur l'aéronef, une limite d'un domaine de vortex d'un aéronef équipé du mécanisme, une limite de vitesse air maximale (Velocity Never Exceed = VNE) d'un aéronef équipé du mécanisme, une limite de fréquence de rotation de rotor principale (Nr), une limite de moment mât du rotor d'un aéronef équipé du mécanisme et par exemple d'un rotor principal sur un hélicoptère.

Pour déterminer la limite opérationnelle, le calculateur 20 peut être relié à divers systèmes de mesure. Par exemple, le calculateur est relié à un capteur de température de chaque moteur, à un capteur de couple de chaque moteur, à un capteur de vitesse de rotation de chaque moteur pour évaluer la limite d'un paramètre limitant de l'installation motrice selon des méthodes usuelles. Chaque moteur est notamment susceptible de fonctionner durant un même vol selon plusieurs régimes et selon au moins un des régimes précités : le régime de décollage PMD, le régime maximal continu PMC, le régime transitoire PMT, le premier régime d'urgence OEI30", le deuxième régime d'urgence OEI2' et le troisième régime d'urgence OEICont. Dès lors, chaque paramètre de surveillance peut être associé à une limite par régime. Ainsi, la limite opérationnelle peut signaler le dépassement d'une limite d'un paramètre de surveillance associée à un régime de fonctionnement du moteur par exemple, notamment du paramètre de surveillance le plus proche de sa limite.

Le calculateur peut être relié à des accéléromètres de l'aéronef ou équivalents pour évaluer les facteurs de charges subis. Ainsi, une limite opérationnelle peut par exemple signaler le dépassement d'un seuil d'un facteur de charge et éventuellement d'un seuil inférieur à un facteur de charge maximal à ne pas dépasser.

Le calculateur peut être relié à des capteurs de vitesse air de l'aéronef ou équivalents pour évaluer sa proximité de la vitesse air à ne pas dépasser (Velocity Never Exceed ou VNE). Ainsi, une limite opérationnelle peut par exemple signaler l'atteinte de cette vitesse maximale au-delà de laquelle l'appareil risquerait d'être endommagé.

Le calculateur peut être relié à des capteurs de moment mât de l'aéronef ou équivalents pour évaluer les efforts subis. Ainsi, une limite opérationnelle peut par exemple signaler le dépassement d'un seuil de moment mât maximal au-delà duquel un endommagement du mât, voire de la tête rotor, se produirait.

Le calculateur peut être relié à au moins un capteur de vitesse de rotation d'un rotor principal (Nr) de l'aéronef. Ainsi, une limite opérationnelle peut par exemple signaler le dépassement d'un seuil minimal de la vitesse de rotation du rotor principal (Nr) en dessous duquel le domaine de vol stable et assuré de l'aéronef sera quitté.

Par exemple, en présence d'une panne moteur la vitesse de rotation du rotor principal peut baisser. La limite opérationnelle peut avoir pour fonction d'indiquer que le pas collectif des pales du rotor principal doit être baissé.

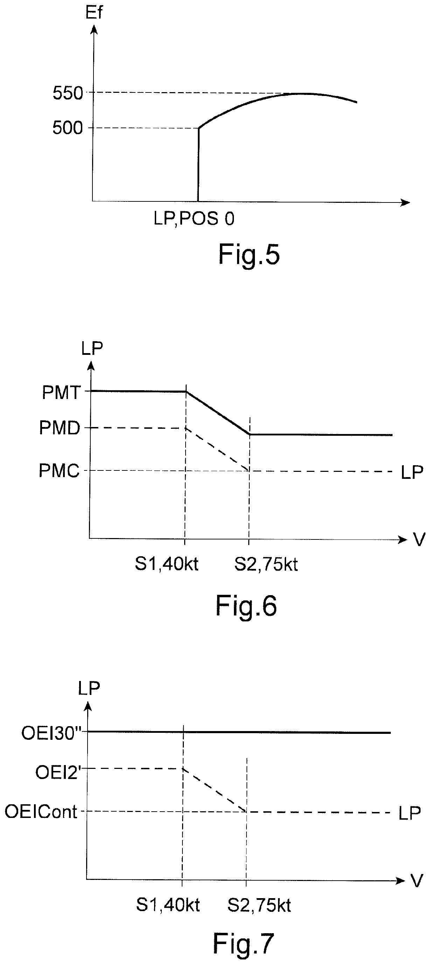

La figure 5 illustre le fonctionnement du mécanisme au regard de la limite opérationnelle courante. Ainsi, cette figure 5 présente un diagramme illustrant l'effort Ef généré par le mécanisme 1 au regard d'une position du levier. Cette figure 5 fait apparaître la position de repos POS0 du doigt associée à la limite opérationnelle LP en vigueur.

Tant que la limite opérationnelle n'est pas atteinte, le mécanisme n'exerce pas d'effort sur le levier. Par contre, à partir de cette limite opérationnelle, le mécanisme exerce un effort qui croit jusqu'à un effort maximal 550 puis diminue légèrement en raison du mouvement circulaire du doigt. L'invention permet d'avoir un écart faible entre la précontrainte 500 et l'effort maximal 550 déployé par le ressort de torsion, notamment en raison du diamètre du ressort de torsion et de la position du point de contact du levier sur le ressort de torsion qui varie lors de la compression du ressort de torsion.

D'un instant à un autre, la limite opérationnelle peut avoir une valeur qui varie et/ou le paramètre physique associé à la limite opérationnelle peut changer. La limite opérationnelle peut être une limite qui varie lorsqu'un levier est déplacé, ce levier étant configuré pour déplacer la butée du mécanisme suite à un dépassement de cette limite opérationnelle. Par exemple, ce levier peut être un levier d'une commande de pas collectif usuelle d'un giravion.

La figure 6 décrit l'évolution de la limite opérationnelle conditionnant le positionnement du doigt dans la position au repos sur un aéronef bimoteur en fonctionnement normal et en présence d'un levier de type levier de pas collectif d'un rotor.

Lorsque l'aéronef se déplace avec une vitesse d'avancement V inférieure à un premier seuil de vitesse S1, par exemple un seuil de 40 nœuds (Kts), la limite opérationnelle LP correspond à la limite du paramètre de surveillance limitant au régime de décollage PMD, le paramètre de surveillance limitant étant le paramètre de surveillance de l'aéronef le plus proche de sa limite. Si cette limite est dépassée, l'installation motrice fonctionne en appliquant le régime transitoire PMT et le mécanisme 1 exerce alors un effort sur le levier.

Lorsque l'aéronef se déplace avec une vitesse d'avancement V supérieure à un deuxième seuil de vitesse S2, par exemple un seuil de 75 nœuds (Kts), la limite opérationnelle correspond à la limite du paramètre de surveillance limitant au régime maximal continu PMC. Si cette limite est dépassée, l'installation motrice fonctionne en appliquant le régime transitoire PMT et le mécanisme 1 exerce alors un effort sur le levier.

Entre, le premier seuil et le deuxième seuil, la limite peut décroitre linéairement en fonction de la vitesse d'avancement.

Si un moteur de l'installation motrice tombe en panne et en référence à la figure 7, lorsque l'aéronef se déplace avec une vitesse d'avancement V inférieure à un premier seuil de vitesse S1, par exemple un seuil de 40 nœuds (Kts), la limite opérationnelle LP correspond à la limite du paramètre de surveillance limitant le deuxième régime d'urgence OEI2'. Si cette limite est dépassée, l'installation motrice fonctionne en appliquant le premier régime d'urgence OEI30" et le mécanisme 1 exerce alors un effort sur le levier.

Lorsque l'aéronef se déplace avec une vitesse d'avancement V supérieure à un deuxième seuil de vitesse S2, par exemple un seuil de 75 nœuds (Kts), la limite opérationnelle correspond à la limite du paramètre de surveillance limitant le troisième régime d'urgence OEIcont. Si cette limite est dépassée, l'installation motrice fonctionne en appliquant le premier régime d'urgence et le mécanisme 1 exerce alors un effort.

Entre, le premier seuil et le deuxième seuil, la limite peut décroitre linéairement en fonction de la vitesse d'avancement.

Quelle que soit la limite opérationnelle, lorsque la limite opérationnelle est établie, le calculateur 20 transmet un signal de commande à l'actionneur 10 porteur d'une information relative à la position au repos que doit atteindre le doigt 47 en l'absence d'effort exercé par le levier sur le doigt 47.

Selon une première variante le signal de commande peut être porteur de la position au repos de l'actionneur en tant que telle.

Selon une première alternative de la première variante, le calculateur détermine la position au repos à atteindre en fonction de la limite opérationnelle puis détermine le mouvement que doit effectuer l'actionneur pour que la position au repos soit atteinte en comparant la position au repos et la position courante de l'actionneur. Cette position courante peut être mesurée à l'aide d'un capteur mesurant la position d'un organe mobile de l'actionneur et relié au calculateur. Alternativement, la position courante peut être connue directement en utilisant un moteur pas à pas. Le signal de commande met alors directement en mouvement le moteur de l'actionneur 10.

Selon une deuxième alternative de la première variante, le calculateur 20 peut transmettre le signal de commande à une unité de traitement de l'actionneur 10 qui commande le moteur ou le vérin de l'actionneur pour atteindre la position requise, éventuellement en exploitant une position courante de l'actionneur mesurée à l'aide d'un capteur mesurant la position d'un organe mobile de l'actionneur.

Selon une deuxième variante, le signal de commande peut être porteur de la limite opérationnelle, une unité de traitement de l'actionneur déterminant la position au repos à atteindre et commandant un moteur ou le vérin de l'actionneur en conséquence.

Quelle que soit la variante, l'actionneur est mis en mouvement pour positionner le doigt 47 dans la position au repos requise, par exemple en faisant tourner le butoir 35 autour de l'axe de rotation AX.

Lorsque le levier appuie sur le doigt et que chaque ergot est en contact avec le butoir, alors la limite opérationnelle du porteur est atteinte. A partir de cet instant, cette limite opérationnelle peut être dépassée, le levier induisant dans ce cas un déplacement du doigt par rapport à l'enceinte de la boîte à ressort en comprimant le ressort de torsion. Un pilote déplaçant le levier ressent alors la résistance du ressort de torsion au travers de l'effort généré par le doigt sur le levier à vaincre pour surpasser la limite opérationnelle. Le doigt 47 génère en effet sur le levier 76 un couple qui croit au fur et à mesure de l'éloignement du doigt de la position au repos. Si le levier est relâché par un pilote, le ressort de torsion se détend. Dès lors, le doigt déplace automatiquement le levier en retournant vers sa position de repos.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles.

## Revendications

1. Mécanisme (1) d'alerte haptique configuré pour exercer un effort sur un levier (76) afin de signaler tactilement le dépassement d'une limite opérationnelle, ledit mécanisme (1) comprenant un actionneur (10),
**caractérisé en ce que** ledit mécanisme (1) comporte :au moins un bras (36) d'un butoir mobile, ledit bras (36) étant mis en mouvement rotatif autour d'un axe de rotation (AX) par ledit actionneur (10), une boîte à ressort (40) munie d'une enceinte (41) dans laquelle est agencé un ressort de torsion (45) précontraint, ladite boîte à ressort (40) étant mobile en rotation autour dudit axe de rotation (AX), ladite enceinte (41) comprenant au moins un ergot (55) mobile en rotation autour dudit axe de rotation (AX, ladite enceinte (41) présentant un flanc avant (62), ledit ressort de torsion (45) s'étendant d'une première extrémité (46) solidaire de l'enceinte (41) jusqu'à un doigt (47), ledit doigt (47) traversant un orifice (64) allongé dudit flanc avant (62) et s'étendant partiellement en dehors de l'enceinte (41) en formant une butée élastique mobile surpassable réglable, le mécanisme comportant une position au repos dudit doigt (47) par rapport au dit axe de rotation (AX) en l'absence d'un effort exercé sur le doigt (47) par ledit levier (76) réglable en déplaçant ledit butoir, ladite position au repos représentant ladite limite opérationnelle lorsque l'ergot (55) est en contact avec ledit au moins un bras (36), ledit doigt (47) étant mobile dans ledit orifice (64) en comprimant ledit ressort de torsion (45) lorsque ledit levier (76) exerce un effort sur ledit doigt (47) visant à surpasser ladite limite opérationnelle.

2. Mécanisme selon la revendication 1, **caractérisé en ce que** ledit orifice (64) est un trou oblong centré sur ledit axe de rotation (AX).

3. Mécanisme selon l'une quelconque des revendications 1 à 2, **caractérisé en ce que** ledit doigt (47) est mobile dans ledit orifice (64) d'un premier bord (65) inclus de l'orifice (64) jusqu'à un deuxième bord (66) de l'orifice (64) non inclus, ledit doigt (47) étant plaqué contre le premier bord (65) en l'absence d'un effort exercé sur le doigt (47) par ledit levier (76), un jeu séparant toujours le doigt du deuxième bord de l'orifice.

4. Mécanisme selon l'une quelconque des revendications 1 à 3, **caractérisé en ce que** ladite précontrainte du ressort de torsion n'est pas réglable.

5. Mécanisme selon l'une quelconque des revendications 1 à 4, **caractérisé en ce que** ledit actionneur est muni d'une partie rotative (12) et d'une partie non tournante (14), ledit actionneur (10) ayant un frein (16) configuré pour immobiliser ladite partie rotative (12) par rapport à la partie non tournante (14).

6. Mécanisme selon l'une quelconque des revendications 1 à 5, **caractérisé en ce que** ledit actionneur est muni d'une partie rotative (12) mobile en rotation autour dudit axe de rotation (AX) et reliée au dit au moins un bras (36).

7. Mécanisme selon l'une quelconque des revendications 1 à 6, **caractérisé en ce que** ledit au moins un bras comporte au moins deux dits bras (36) portés par un moyeu (37) fixé à l'actionneur, ledit au moins un ergot comportant un ergot (55) par bras (36).

8. Mécanisme selon l'une quelconque des revendications 1 à 7, **caractérisé en ce qu'**au moins un bras comporte une chape munie de deux joues, un ergot étant agencé entre lesdites deux joues.

9. Mécanisme selon l'une quelconque des revendications 1 à 8, **caractérisé en ce que** le mécanisme comporte un corps (30) immobile en rotation autour d'un axe de rotation (AX), ledit corps (30) portant au moins un organe d'arrêt (33) fixe en rotation par rapport à l'axe de rotation (AX) pour limiter l'amplitude de rotation d'un ergot par interférence de forme.

10. Mécanisme selon la revendication 9,
**caractérisé en ce que** ledit corps (30) est disposé au moins partiellement autour de l'actionneur (10), ledit organe d'arrêt (33) s'étendant radialement au regard dudit axe de rotation (AX) en s'éloignant de l'actionneur (10), ladite boîte à ressort (40) étant montée en liaison pivot autour du corps (30).

11. Mécanisme selon l'une quelconque des revendications 1 à 10,
**caractérisé en ce que** ladite enceinte (41) comporte :
un premier composant (42) comprenant un flanc arrière (43) portant des premières branches (44) chaque première branche (44) s'étendant à partir dudit flanc arrière (43) selon une direction axiale, ladite première extrémité (46) étant fixée au premier composant (42),
un deuxième composant (50) muni d'un anneau (51) portant une deuxième branche (53) par première branche (44), ledit ressort de torsion (45) s'étendant partiellement dans un espace (INT) agencé radialement entre les premières branches (44) et longitudinalement entre le flanc arrière (43) et l'anneau (51), chaque deuxième branche (53) s'étendant à partir dudit anneau (51) parallèlement à une première branche (44) en s'éloignant dudit espace (INT), chaque deuxième branche (53) formant au moins partiellement un ergot (55), ledit doigt (47) traversant ledit anneau (51) et étant en saillie longitudinale par rapport à des plans (100, 101) contenant des extrémités libres (441, 531) des premières branches (44) et des deuxièmes branches (53),
un palier (61) traversant ledit flanc arrière (43) ainsi que ledit ressort de torsion (45) et ledit anneau (51), ledit palier (61) portant ledit flanc avant (62), ledit flanc avant (62) présentant une échancrure (63) par ergot (55), chaque ergot (55) étant agencé dans une dite échancrure (63).

12. Mécanisme selon la revendication 11 et l'une quelconque des revendications 9 à 10,
**caractérisé en ce que** ledit organe d'arrêt (33) est agencé longitudinalement entre le flanc avant (62) et ledit au moins un bras (36).

13. Mécanisme selon l'une quelconque des revendications 1 à 12,
**caractérisé en ce que** ledit mécanisme (1) comporte un contacteur (70) détectant un contact entre ledit doigt (47) et ledit levier (76).

14. Mécanisme selon l'une quelconque des revendications 1 à 13,
**caractérisé en ce que** ladite limite opérationnelle peut être au moins une des limites suivantes : une limite d'une installation motrice d'un aéronef équipé du mécanisme, une limite de facteur de charge exercé sur un aéronef équipé du mécanisme, une limite d'un domaine de vortex d'un aéronef équipé du mécanisme, une limite de vitesse air maximale d'un aéronef équipé du mécanisme, une limite d'une vitesse de rotation d'un rotor principal, une limite de moment mât d'un rotor d'un aéronef équipé du mécanisme.

15. Aéronef (75) muni d'un rotor (80) et d'un levier (76) d'une commande (81) de pas collectif reliée à une chaine mécanique (79) pour contrôler collectivement un pas de pales du rotor (80),
**caractérisé en ce que** ledit aéronef (75) comporte un mécanisme (1) selon l'une quelconque des revendications 1 à 14, ledit aéronef (75) comportant un calculateur (20) relié à l'actionneur (10), le calculateur (20) étant configuré pour établir ladite limite opérationnelle et transmettant un signal de commande à l'actionneur (10) pour que le levier (76) entre en contact avec ledit doigt (47) lorsque ladite limite opérationnelle est atteinte.

16. Procédé d'aide au contrôle d'un aéronef selon la revendication 15,
**caractérisé en ce que** le procédé comporte les étapes suivantes :
détermination par le calculateur (20) d'une limite opérationnelle de l'aéronef (75),
transmission par le calculateur (20) à l'actionneur d'un signal de commande porteur d'une information relative à la position au repos que doit atteindre ledit doigt (47) en l'absence d'effort exercé par le levier sur le doigt (47),
mouvement de l'actionneur (10) pour positionner ledit doigt (47) dans ladite position au repos,
surpassement de ladite limite opérationnel en exerçant un effort sur ledit doigt (47) avec le levier (76), le doigt (47) générant sur le levier (76) un couple croissant au fur et à mesure de l'éloignement du doigt de la position au repos.

## Patentansprüche

1. Haptischer Warnmechanismus (1), der konfiguriert ist, um eine Kraft auf einen Hebel (76) auszuüben, um das Überschreiten einer Betriebsgrenze taktil zu signalisieren, wobei der Mechanismus (1) einen Aktuator (10) umfasst,
**dadurch gekennzeichnet, dass** der Mechanismus (1) umfasst: mindestens einen Arm (36) eines beweglichen Anschlags, wobei der Arm (36) durch den Aktuator (10) in eine Drehbewegung um eine Drehachse (AX) versetzt wird,
einen Federkasten (40) mit einem Gehäuse (41), in dem eine vorgespannte Torsionsfeder (45) angeordnet ist, wobei der Federkasten (40) um die Drehachse (AX) drehbar ist, das Gehäuse (41) mindestens einen um die Drehachse (AX) drehbaren Zapfen (55) aufweist und das Gehäuse (41) eine Vorderflanke (62) hat, wobei sich die Torsionsfeder (45) von einem fest mit dem Gehäuse (41) verbundenen ersten Ende (46) bis zu einem Finger (47) erstreckt, wobei der Finger (47) durch eine längliche Öffnung (64) der vorderen Flanke (62) hindurchgeht, sich teilweise außerhalb des Gehäuses (41) erstreckt und dabei einen einstellbaren überwindbaren beweglichen elastischen Anschlag bildet, wobei der Mechanismus eine Ruheposition des Fingers (47) in Bezug auf die Drehachse (AX) in Abwesenheit einer von dem Hebel (76) auf den Finger (47) ausgeübten Kraft aufweist, die durch Verschieben des Anschlags einstellbar ist, wobei die Ruheposition die Betriebsgrenze darstellt, wenn der Zapfen (55) in Kontakt mit dem mindestens einen Arm (36) ist, wobei der Finger (47) in der Öffnung (64) durch Zusammendrücken der Torsionsfeder (45) beweglich ist, wenn der Hebel (76) eine Kraft auf den Finger (47) ausübt, die darauf abzielt, die Betriebsgrenze zu überwinden.

2. Mechanismus nach Anspruch 1,
**dadurch gekennzeichnet, dass** die Öffnung (64) ein auf der Drehachse (AX) zentriertes Langloch ist.

3. Mechanismus nach einem der Ansprüche 1 bis 2,
**dadurch gekennzeichnet, dass** der Finger (47) in der Öffnung (64) von einem ersten Rand (65) der Öffnung (64) einschließlich zu einem zweiten Rand (66) der Öffnung (64) nicht einschließlich bewegbar ist, dass der Finger (47) in Abwesenheit einer durch den Hebel (76) auf den Finger (47) ausgeübten Kraft gegen den ersten Rand (65) gedrückt wird, und dass immer ein Spiel den Finger vom zweiten Rand der Öffnung trennt.

4. Mechanismus nach einem der Ansprüche 1 bis 3,
**dadurch gekennzeichnet, dass** die Vorspannung der Torsionsfeder nicht einstellbar ist.

5. Mechanismus nach einem der Ansprüche 1 bis 4,
**dadurch gekennzeichnet, dass** das Betätigungselement mit einem rotierenden Abschnitt (12) und einem nicht rotierenden Abschnitt (14) versehen ist, wobei das Betätigungselement (10) eine Bremse (16) aufweist, die konfiguriert ist, um den rotierenden Abschnitt (12) relativ zu dem nicht rotierenden Abschnitt (14) festzusetzen.

6. Mechanismus nach einem der Ansprüche 1 bis 5,
**dadurch gekennzeichnet, dass** der Aktuator mit einem Drehteil (12) versehen ist, das um die Drehachse (AX) drehbar und mit dem mindestens einen Arm (36) verbunden ist.

7. Mechanismus nach einem der Ansprüche 1 bis 6,
**dadurch gekennzeichnet, dass** der mindestens eine Arm mindestens zwei Arme (36) umfasst, die von einer an dem Aktuator befestigten Nabe (37) getragen sind, und dass der mindestens eine Zapfen einen Zapfen (55) pro Arm (36) umfasst.

8. Mechanismus nach einem der Ansprüche 1 bis 7,
**dadurch gekennzeichnet, dass** mindestens ein Arm ein mit zwei Wangen versehenes Joch umfasst, wobei zwischen den beiden Wangen ein Zapfen angeordnet ist.

9. Mechanismus nach einem der Ansprüche 1 bis 8,
**dadurch gekennzeichnet, dass** der Mechanismus einen um eine Drehachse (AX) drehfesten Körper (30) umfasst, wobei der Körper (30) mindestens ein Halteelement (33) trägt, das in Bezug auf die Drehachse (AX) drehfest ist, um die Drehamplitude eines Zapfens durch Formschluss zu begrenzen.

10. Mechanismus nach Anspruch 9,
**dadurch gekennzeichnet, dass** der Körper (30) zumindest teilweise um den Aktuator (10) herum angeordnet ist, wobei sich das Halteelement (33) radial in Bezug auf die Drehachse (AX) vom Aktuator (10) weg erstreckt, wobei der Federkasten (40) in schwenkbarer Verbindung um den Körper (30) herum montiert ist.

11. Mechanismus nach einem der Ansprüche 1 bis 10,
**dadurch gekennzeichnet, dass** das Gehäuse (41) umfasst:
ein erstes Bauteil (42) mit einer hinteren Flanke (43), die erste Zweige (44) trägt, wobei sich jeder erste Zweig (44) von der hinteren Flanke (43) in einer axialen Richtung erstreckt, und das erste Ende (46) an der ersten Komponente (42) befestigt ist,
ein zweites Bauteil (50), das mit einem Ring (51) versehen ist, der pro erstem Zweig (44) einen zweiten Zweig (53) trägt, wobei sich die Torsionsfeder (45) teilweise in einem Raum (INT) erstreckt, der radial zwischen den ersten Zweigen (44) und in Längsrichtung zwischen der hinteren Flanke (43) und dem Ring (51) angeordnet ist, wobei sich jeder zweite Zweig (53) von dem Ring (51) parallel zu einem ersten Zweig (44) weg von dem Raum (INT) erstreckt,
wobei jeder zweite Zweig (53) zumindest teilweise einen Zapfen (55) bildet, wobei der Finger (47) durch den Ring (51) hindurchgeht und in Längsrichtung relativ zu Ebenen (100, 101) vorsteht, die freie Enden (441, 531) der ersten Zweige (44) und der zweiten Zweige (53) enthalten,
ein Lager (61), das durch die hintere Flanke (43) sowie die Torsionsfeder (45) und den Ring (51) hindurchgeht, wobei das Lager (61) die vordere Flanke (62) trägt, wobei die vordere Flanke (62) eine Kerbe (63) pro Zapfen (55) aufweist, wobei jeder Zapfen (55) in einer solchen Kerbe (63) angeordnet ist.

12. Mechanismus nach Anspruch 11 und einem der Ansprüche 9 bis 10,
**dadurch gekennzeichnet, dass** das Halteelement (33) in Längsrichtung zwischen der Vorderflanke (62) und dem mindestens einen Arm (36) angeordnet ist.

13. Mechanismus nach einem der Ansprüche 1 bis 12,
**dadurch gekennzeichnet, dass** der Mechanismus (1) einen Kontaktgeber (70) umfasst, der einen Kontakt zwischen dem Finger (47) und dem Hebel (76) erfasst.

14. Mechanismus nach einem der Ansprüche 1 bis 13,
**dadurch gekennzeichnet, dass** die Betriebsgrenze mindestens eine der folgenden Grenzen sein kann: eine Grenze eines Triebwerks eines mit dem Mechanismus ausgestatteten Luftfahrzeugs, eine Grenze eines Lastfaktors, der auf ein mit dem Mechanismus ausgestattetes Luftfahrzeug ausgeübt wird, eine Grenze einer Wirbeldomäne eines mit dem Mechanismus ausgestatteten Luftfahrzeugs, eine Grenze einer maximalen Fluggeschwindigkeit eines mit dem Mechanismus ausgestatteten Luftfahrzeugs, eine Grenze einer Rotationsgeschwindigkeit eines Hauptrotors, eine Grenze eines Mastmoments eines Rotors eines mit dem Mechanismus ausgestatteten Luftfahrzeugs.

15. Luftfahrzeug (75) mit einem Rotor (80) und einem Hebel (76) einer kollektiven Anstellwinkelsteuerung (81), die mit einem Antriebsstrang (79) zur kollektiven Steuerung eines Anstellwinkels der Blätter des Rotors (80) verbunden ist,
**dadurch gekennzeichnet, dass** das Luftfahrzeug (75) einen Mechanismus (1) nach einem der Ansprüche 1 bis 14 umfasst, dass das Luftfahrzeug (75) einen Rechner (20) umfasst, der mit dem Aktuator (10) verbunden ist, und dass der Rechner (20) konfiguriert ist, um die Betriebsgrenze festzulegen und ein Steuersignal an den Aktuator (10) zu übertragen, so dass der Hebel (76) in Kontakt mit dem Finger (47) kommt, wenn die Betriebsgrenze erreicht ist.

16. Verfahren zur Unterstützung der Steuerung eines Luftfahrzeugs nach Anspruch 15,
**dadurch gekennzeichnet, dass** das Verfahren die folgenden Schritte umfasst:
Bestimmen einer Betriebsgrenze des Luftfahrzeugs (75) durch den Rechner (20),
Übermitteln eines Steuersignals durch den Rechner (20) an den Aktuator, das eine Information bezüglich der Ruheposition trägt, die der Finger (47) bei Abwesenheit einer durch den Hebel auf den Finger (47) ausgeübten Kraft erreichen soll,
Bewegen des Aktuators (10), um den Finger (47) in die Ruheposition zu bringen,
Überwinden der Betriebsgrenze durch Ausüben einer Kraft auf den Finger (47) mit dem Hebel (76), wobei der Finger (47) auf dem Hebel (76) ein mit zunehmender Entfernung des Fingers von der Ruheposition zunehmendes Drehmoment erzeugt.

## Claims

1. Haptic alert mechanism (1) for exerting a force on a lever (76) in order to signal in tactile fashion the crossing of an operational limit, the said mechanism (1) comprising an actuator (10),
**characterised in that** the said mechanism (1) comprises: at least one arm (36) of a mobile stopping device, the said arm (36) being set in rotary movement about an axis of rotation (AX) by the said actuator (10),
a spring box (40) provided with a compartment (41) in which a prestressed torsion spring (45) is arranged, the said spring box (40) being mobile in rotation about the said axis of rotation (AX), the said compartment (41) comprising at least one lug (55) which is mobile in rotation about the said axis of rotation (AX), the said compartment (41) having a front side (62), the said torsion spring (45) extending from a first end (46) secured to the compartment (41) to a finger (47), the said finger (47) passing through an elongate orifice (64) of the said front side (62) and extending partially out of the compartment (41) while forming an adjustable exceedable mobile resilient stop, the mechanism comprising a resting position of the said finger (47) with respect to the said axis of rotation (AX) in the absence of a force exerted on the finger (47) by the said lever (76) which is adjustable by displacing the said stopping device, the resting position representing the said operational limit when the lug (55) is in contact with the said at least one arm (36), the said finger (47) being mobile in the said orifice (64) by compressing the said torsion spring (45) when the said lever (76) exerts a force on the said finger (47) aiming to exceed the said operational limit.

2. Mechanism according to Claim 1,
**characterised in that** the said orifice (64) is an oblong hole centred on the said axis of rotation (AX).

3. Mechanism according to either of Claims 1 and 2,
**characterised in that** the said finger (47) is mobile in the said orifice (64) from a first edge (65), inclusive, of the orifice (64) to a second edge (66) of the orifice (64), not inclusive, the said finger (47) being pressed against the first edge (65) in the absence of a force exerted on the finger (47) by the said lever (76), a play always separating the finger from the second edge of the orifice.

4. Mechanism according to any one of Claims 1 to 3, **characterised in that** the said prestress of the torsion spring is not adjustable.

5. Mechanism according to any one of Claims 1 to 4, **characterised in that** the said actuator is provided with a rotary part (12) and a non-rotating part (14), the said actuator (10) having a brake (16) configured to immobilise the said rotary part (12) with respect to the non-rotating part (14).

6. Mechanism according to any one of Claims 1 to 5, **characterised in that** the said actuator is provided with a rotary part (12) mobile in rotation about the said axis of rotation (AX) and connected to the said at least one arm (36) .

7. Mechanism according to any one of Claims 1 to 6,
**characterised in that** the said at least one arm comprises at least two said arms (36) carried by a hub (37) fixed to the actuator, the said at least one lug comprising one lug (55) per arm (36).

8. Mechanism according to any one of Claims 1 to 7, **characterised in that** at least one arm comprises a fork provided with two cheeks, a lug being arranged between the said to cheeks.

9. Mechanism according to any one of Claims 1 to 8,
**characterised in that** the mechanism comprises a body (30) which is immobile in rotation about an axis of rotation (AX), the said body (30) carrying at least one retaining member (33) which is fixed in rotation with respect to the axis of rotation (AX) in order to limit the amplitude of rotation of a lug by shape interference.

10. Mechanism according to Claim 9,
**characterised in that** the said body (30) is arranged at least partially around the actuator (10), the said retaining member (33) extending radially in relation to the axis of rotation (AX) while moving away from the actuator (10), the said spring box (40) being mounted in pivot connection about the body (30).

11. Mechanism according to any one of Claims 1 to 10, **characterised in that** the said compartment (41) includes:
a first component (42) comprising a rear side (43) carrying first branches (44), each first branch (44) extending from the said rear side (43) along an axial direction, the said first end (46) being fixed to the first component (42),
a second component (50) provided with a ring (51) carrying one second branch (53) per first branch (44), the said torsion spring (45) extending partially into a space (INT) arranged radially between the first branches (44) and longitudinally between the rear side (43) and the ring (51), each second branch (53) extending from the said ring (41) parallel to a first branch (44) while moving away from the said space (INT), each second branch (53) at least partially forming a lug (55), the said finger (47) passing through the said ring (51) and projecting longitudinally with respect to planes (100, 101) containing free ends (441, 531) of the first branches (44) and of the second branches (53),
a bearing structure (61) passing through the said rear side (43) as well as the said torsion spring (45) and the said ring (51), the said bearing structure (61) carrying the said front side (62), the said front side (62) having one notch (63) per lug (55), each lug (55) being arranged in one said notch (63).

12. Mechanism according to Claim 11 and either of Claims 9 and 10,
**characterised in that** the said retaining member (33) is arranged longitudinally between the front side (62) and the said at least one arm (36).

13. Mechanism according to any one of Claims 1 to 12,
**characterised in that** the said mechanism (1) comprises a contactor (70) detecting contact between the said finger (47) and the said lever (76).

14. Mechanism according to any one of Claims 1 to 13,
**characterised in that** the said operational limit may be at least one of the following limits: a limit of a power plant of an aircraft equipped with the mechanism, a limit of a load factor exerted on an aircraft equipped with the mechanism, a limit of a vortex ring state of an aircraft equipped with the mechanism, a maximum air speed limit of an aircraft equipped with the mechanism, a limit of a rotation speed of a main rotor, a mast torque limit of a rotor of an aircraft equipped with the mechanism.

15. Aircraft (75) provided with a rotor (80) and with a lever (76) of a collective pitch control (81) connected to a mechanical sequence (79) for collectively controlling a pitch of blades of the rotor (80),
**characterised in that** the said aircraft (75) comprises a mechanism (1) according to any one of Claims 1 to 14, the said aircraft (75) comprising a computer (70) connected to the actuator (10), the computer (20) being configured to establish the said operational limit and transmitting a control signal to the actuator (10) so that the lever (76) comes in contact with the said finger (47) when the said operational limit is reached.

16. Method for assisting the control of an aircraft according to Claim 15,
**characterised in that** the method comprises the following steps:
determination by the computer (20) of an operational limit of the aircraft (75),
transmission by the computer (20) to the actuator of a control signal carrying information relating to the resting position which the said finger (47) is intended to reach in the absence of a force exerted by the lever on the finger (47),
movement of the actuator (10) in order to position the said finger (47) in the said resting position,
exceeding of the said operational limit by exerting a force on the said finger (47) with the lever (76), the finger (47) generating a torque on the lever (76) which increases as the finger moves away from the resting position.
